(19) Europäisches Patentamt

European Patent Office

Office européen des brevets

(11) **EP 1 291 627 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(51) Int Cl.:
*G01J 3/28* (2006.01)     *G01J 3/44* (2006.01)
*G01N 21/64* (2006.01)     *G01N 21/27* (2006.01)

(21) Anmeldenummer: **02090321.7**

(22) Anmeldetag: **06.09.2002**

(54) **Verfahren und Vorrichtung zur Multiparameter-Akquisition von Einzelphotonen zur simultanen Erzeugung von zeit- und orts- sowie zeit- und wellenlängen-aufgelösten Fluoreszenz-Bildern**

Method and Apparatus for multiparameter acquisition of single photons to produce simultaneously time and space as well as time and wavelength resolved fluorescence images

Procédé et dispositif pour l'acquisition multiparamétrique de photons individuels pour la production simultanée de fluorescence résolues temporellement et spatialement ainsi que temporellement et spectralement

(84) Benannte Vertragsstaaten:
**AT BE BG CH CY CZ DE DK EE ES FI FR GB GR IE IT LI LU MC NL PT SE SK TR**

(30) Priorität: **06.09.2001 DE 10144435**

(43) Veröffentlichungstag der Anmeldung:
**12.03.2003 Patentblatt 2003/11**

(73) Patentinhaber: **EUROPHOTON GmbH, Gesellschaft für optische Sensorik**
**12247 Berlin (DE)**

(72) Erfinder: **Kemnitz, Klaus Dr.**
**12247 Berlin (DE)**

(74) Vertreter: **Schneider, Henry et al**
**Anwaltskanzlei**
**Gulde Hengelhaupt Ziebig & Schneider**
**Wallstrasse 58/59**
**10179 Berlin (DE)**

(56) Entgegenhaltungen:
WO-A-01/59436          WO-A-98/23941
DE-A- 4 429 383          US-A- 5 418 371

- KEMNITZ K ET AL: "Detector for multichannel spectroscopy and fluorescence lifetime imaging on the picosecond timescale" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. 387, Nr. 1, 1. März 1997 (1997-03-01), Seiten 86-87, XP004058923 ISSN: 0168-9002
- BECKER W ET AL: "TIME-RESOLVED DETECTION AND IDENTIFICATION OF SINGLE ANALYTE MOLECULES IN MICROCAPILLARIES BY TIME-CORRELATED SINGLE-PHOTON COUNTING (TCSPC)" REVIEW OF SCIENTIFIC INSTRUMENTS, AMERICAN INSTITUTE OF PHYSICS. NEW YORK, US, Bd. 70, Nr. 3, März 1999 (1999-03), Seiten 1835-1841, XP000875391 ISSN: 0034-6748
- AINBUND M R ET AL: "SIMULTANEOUS SPECTRAL AND TEMPORAL RESOLUTION IN A SINGLE PHOTON COUNTING TECHNIQUE" REVIEW OF SCIENTIFIC INSTRUMENTS, AMERICAN INSTITUTE OF PHYSICS. NEW YORK, US, Bd. 63, Nr. 6, 1. Juni 1992 (1992-06-01), Seiten 3274-3279, XP000301823 ISSN: 0034-6748
- KELLER R A ET AL: "SINGLE-MOLECULE FLUORESCENCE ANALYSIS IN SOLUTION" APPLIED SPECTROSCOPY, THE SOCIETY FOR APPLIED SPECTROSCOPY. BALTIMORE, US, Bd. 50, Nr. 7, 1. Juli 1996 (1996-07-01), Seiten 12A-32A, XP000642337 ISSN: 0003-7028

**Beschreibung**

Die Erfindung betrifft ein Verfahren und eine Vorrichtung (Fluoreszenz-Mikro- und Makro-Spektroskop) zur Multiparameter-Akquisition von Einzelphotonen zur simultanen Erzeugung von zeit- und orts- sowie zeit- und wellenlängen-aufgelösten Fluoreszenz-Bildern von Proben, wie sie zum Beispiel zur Bestimmung von Parametern bei lebenden Zellen benötigt werden, und wie sie zum Beispiel bei der multikanaligen, hochparallelen und hochempfindlichen Fluoreszenzanalyse von Biomolekülen zum Einsatz kommen (zeitaufgelöste Multikanal-Mikro- und Makro-Spektroskopie) gemäß den Oberbegriffen der Ansprüche 1 und 10.

Fluoreszenzspektroskopische Meßmethoden erlangen aufgrund der hohen Nachweisempfindlichkeit und Spezifität eine wachsende Bedeutung, insbesondere in der biotechnologischen und medizinischen Diagnostik.

Zellen besitzen die Eigenschaft, eine charakteristische Fluoreszenz nach Bestrahlung mit kurzwelligem Licht auszusenden. Für dieses Verhalten sind insbesondere zelleigene, am Stoffwechsel beteiligte Moleküle verantwortlich, wie Nicotinamid-Adenin-Dinucleotid (NADH), Flavine, Porphyrine. Das Emissionsspektrum der zelleigenen Fluoreszenz kann vom blauen bis zum roten Bereich des sichtbaren Spektrums (400 - 700 nm) reichen. Die zelleigene DADH Fluoreszenz kann als Indikator für den Zellstoffwechsel dienen.

Diese sogenannte Autofluoreszenz kann aber auch sehr störend sein, da sie allgegenwärtig bei Messungen von lebenden Zellen ist und die Fluoreszenz der externen bzw. zellfabrizierten Fluoreszenzproben überlagert.

Die Emissionsbande der Autofluoreszenz ist sehr breit (> 2000 cm$^{-1}$, im Gegensatz zum Spektrum von normalen Fluoreszenzproben, z.B. GFP mit ca. 1500 cm$^{-1}$).

Zudem ist die Fluoreszenzdynamik multiexponentiell ($\geq$ 3 Komponenten für FAD (K. Kemnitz et. al, J. Fluorescence, 7(1997)93)).

Um Fluoreszenz anzuregen, werden die Fluorophore mit monochromatischem Licht in der Nähe des Absorptionsmaximum bestrahlt. Als Anregungsquellen werden entweder gefilterte Lampen oder Laser verwendet. Durch spektrale Filterung der Emission wird die gewünschte Fluoreszenzbande ausgewählt.

Darüber hinaus können laserinduzierte Fluoreszenzsignale allgemein zur Charakterisierung eines Untersuchungsgegenstandes, zum Beispiel von Lösungen oder Oberflächen fester Körper ausgewertet werden.

Die üblichen Verfahren zur Fluoreszenzdetektion sind statische Verfahren, welche Informationen über die Intensität bei einer begrenzten Anzahl von Emissionswellenlängen liefert (z.B. zwei, wie beim "Ratio-Imaging") oder in einem modernen 3D-Spektroskopie-Verfahren sogar das statische Fluoreszenzspektrum in jedem einzelnen Orts-Pixel darstellt (Spectral Diagnostics Ltd., P.O. Box 147, Migdal Haemek, 10551 Israel) .

Über das zeitliche Abklingverhalten der Fluoreszenzen können in der Regel dabei keine Aussagen getroffen werden.

Um die Empfindlichkeit und Selektivität der statischen Fluoreszenzmeßmethoden zu steigern, wurde in neuerer Zeit die Fluoreszenz-Lebensdauer-Imaging-Mikroskopie (FLIM) entwickelt, die in der Phasen- und Zeit-Domäne Anwendung findet.

Die Phasen-Domäne verwendet eine periodische Modulation der Laser-Anregung und/oder Emissionsdetektion.

Die Zeitdomäne verwendet gepulste Laser und stellt eine direkte Methode dar, im Gegensatz zur Phasenfluoremetrie, die eine Transformation vom Phasenraum in den Zeitraum erfordert.

Verfahren und Anordnungen zur Erzeugung von zeitaufgelösten Fluoreszenzbildern in der "Zeit-Domäne" sind bekannt.

Ein bekanntes Verfahren ist das Verfahren "ZOKEPZ" (zeit-und orts-korrelierte Einzelphotonenzählung bzw. auf englisch "TSCSPC" (time- and space-correlated single photon counting) (K.Kemnitz et.al: Time- and Space-Correlated Single Photon Counting Spectroscopy, SPIE Proc., 2628 (1995)2.), welches eine Weiterentwicklung von "ZKEPZ" (zeit-korrelierte Einzelphotonenzählung) bzw. auf englisch "TCSPC" (time-correlated single photon counting) ist (D.V. O'Connor and D. Phillips, 1984, Academic Press) und das Verfahren "ZKEPZ in Kombination mit einem Punkt-Scan- Mechanismus" (Becker und Hickl GmbH, Nahmitzer Damm 30, 12277 Berlin). ZOKEPZ ist allen vergleichbaren Methoden in allen Bereichen, wie z.B. Dynamischer Bereich, Zeitauflösung, und Hochqualitätskinetik überlegen, mit Ausnahme der Quanteneffizienz der Photokathode (CCD besser).

Die zeitkorrelierte Einzelphotonenzählung (ZKEPZ und ZOKEPZ) weist eine Ultra-Empfindlichkeit, einen extrem hohen dynamischen Bereich von > 10$^6$ und eine Hochqualitätskinetik auf (bei bis zu 16.000 Punkten auf der Zeitachse), vereinigt mit einer Zeitauflösung von bis zu 2 ps (nach Dekonvolution).

Das Verfahren "ZKEPZ in Kombination mit einem Punkt-Scan-Mechanismus" weist den Nachteil auf, dass im Fokus des Einzelpunkts, der wiederholt über die Probe gescannt wird, sehr hohe Peakpower herrscht, die entweder zu Zellschäden (Zweiphotonenabsorption: K. König et al., *Cell damage in two-photon microscopes,* Proc. SPIE, 2926(1996) 172) oder zu unbemerkten photodynamischen Reaktionen und damit zu irreführenden Fluoreszenzdynamiken in lebenden Zellen führen kann (Einphotonenabsorption: K. Kemnitz et al., EC Demonstration Projekt BIO4-CT97-2177).

Zusätzlich gibt es noch ein drittes Verfahren, das eine schaltbare (gated) CCD-Kamera verwendet (LaVision BioTech GmbH, Höfeweg 74, 33619 Bielefeld). Die CCD-Technologie scheidet aber durch den geringen dynamischen Bereich und durch die kleine Anzahl von Punkten auf der Zeitachse für anspruchsvolle Anwendungen aus.

Es werden MCP-Detektoren mit speziellen Anoden verwendet, die simultan Orts- und Zeit-Informationen liefern. Diese ortsauflösenden Anoden für MCP-Detektoren sind ursprünglich als Delay-Line (DL)-Anoden, gekreuzte DL (GDL), Wedge-and-Strip (WS)-Anoden und Quadrant-Anoden (QA) in Vakuumanwendungen (d.h. ohne Photokathode) zum Einsatz gekommen (M. Lampton and R.F. Malina, *Quadrant anode image sensor,* Rev.Sci.Instr., 47(1976)1360; C.Martin, P.Jelinsky, M.Lampton, R.F.Malina, *Wedge-and-strip anodes for centroid-finding position-sensitive photon and particle detectors,* Rev.Sci.Instr., 52 (1981) 1067).

Quadrant-Anoden (QA) können aus leitendem bzw. nichtleitendem Material gefertigt werden und unterscheiden sich in ihren Eigenschaften.

Allgemein spricht man von Coded-Anode(CA)-Detektoren, wenn sie Ladungen messen und durch segmentierte Anoden die Ortskoordinaten bestimmen: Wedge-and-Strip (WS) Anode, QA, etc..
Unter Verwendung einer DL-Anode (Messung der Laufzeitdifferenz von zwei elektrischen Impulsen) wurde ein Photomultiplier (PMT) mit Photokathode (Einzelphotonen-Detektor) entwickelt, der sehr gut für lineare Anwendungen geeignet ist (Eldy Ltd.: *Simultaneous spectral and temporal resolution in single photon counting technique,* M.R.Ainbund et al., Rev.Sci.Intr., 63(1992)3274); US-Patent No. 5,148,031), bzw. für Imaging-Anwendungen, wenn gekreuzte (2-dimensional) DL Anoden verwendet werden (RoentDek GmbH, Im Vogelshaag 8, 65779 Kelkheim, O. Jagutzki et al., *Fast Position and Time Sensitive Readout of Image Intensifiers for Single Photon Detection,* Proc. SPIE, 3764(1999) 61., US Patent 6,686,721).

Des weiteren wurde ein 4-Anoden-QA-MCP-PMT (4QA) (leitende Anode) entwickelt (Eldy Ltd.; EuroPhoton GmbH im Projekt INTAS-94-4461), der jedoch Bildverzerrungen und eine Limitierung des Gesichtsfeldes aufweist (M.Lampton and R.F. Malina, *Quadrant anode image sensor,* Rev.Sci.Instr., 47(1976)1360; C. Martin, P. Jelinsky, M. Lampton, R.F. Malina, *Wedge-and-strip anodes for centroid-finding position-sensitive photon and particle detectors,* Rev.Sci.Instr., 52(1981)1067).

Aus dem DE-G 94 21 717.3 ist eine Vorrichtung zur zeit- und ortsaufgelösten Fluoreszenz- bzw. Streulicht-Spektroskopie mit einer gepulsten Strahlungsquelle, einem Strahlungsteiler, einer Einheit zur Ortsauflösung, einer Einheit zur zeitlichen Auflösung bekannt, bei welcher der Strahlungsquelle ein zu untersuchendes Objekt und ein Referenzobjekt zugeordnet sind, und die mindestens eine einem Polychromator mit der Probe bzw. der Referenz optisch verbindende Einrichtung aufweist (keine Mikroskopanwendung).

Die bekannten Methoden sind ungeeignet zum Studium lebender Zellen unter minimal-invasiven Bedingungen, die eine ultra-niedrige Anregungsenergie im 1 mW/cm$^2$-Bereich aufweisen und eine ultra-niedrige Probenkonzentration haben (z.B. 1 Probenmolekül EB in 10.000 DNA Basenpaaren, M. Tramier et al., *Restrained Torsional Dynamics of Nuclear DNA in Living Proliferative Mammalian Cells,* Biophys. Journal, 78(2000)2614.), die oft eine komplexe Fluoreszenzdynamik bis zu fünf Komponenten enthalten. Zudem kann der Autofluoreszenz-Hintergrund zu ernsten Störungen führen, wie z.B. das Vortäuschen der Anwesenheit von FRET.

Aufgabe der Erfindung ist es, ein gattungsgemäßes Verfahren und eine Vorrichtung zu entwickeln, mit denen die beschriebenen Nachteile des Standes der Technik vermieden werden und mit denen Informationen zum Beispiel über makromolekulare Wechselwirkungen in lebenden Zellen unter Bewahrung des ungestörten Lebens durch eine minimal-invasive Beobachtung unter Verwendung ultra-niedriger Anregungsenergien von < 1mW/cm2 und ultra-niedriger Farbstoffkonzentrationen (1 Probenmolekül EB in 10.000 DNA Basenpaaren), gewonnen werden können, unter Vermeidung der durch Autofluoreszenz verursachten Artefakte.

Diese Aufgabe wird erfindungsgemäß durch ein Verfahren nach den Merkmalen des Anspruchs 1 gelöst.

DE 44 29 383 A offenbart ein Verfahren und eine Vorrichtung zur zeit- und ortsaufgelösten Fluoreszenz- bzw. Streulichtspektroskopie. Das Patent beschreibt eine Kombination eines 1-dimensionalen Detektors im Piko- und Nanosekundenbereich mit einem nicht-abbildenden Polychromator, um ein einzelnes zeitaufgelöstes Spektrum eines einzelnen Imagepixels zu erhalten. Es wird kein xy-Bild aufgenommen.

US-A-5 418 371 D2 offenbart ein Fluorometer, bei dem Fluorophore simultan mit zeit-modulierten Laserstrahlen angeregt werden. Jeder Laserstrahl ist dabei mit einem Detektor und Lock-in Verstärkern synchronisiert. Eine Nachweis von Fluoreszenzsignalen mit Lock-in Verstärkern erfordert eine periodische Modulation der Anregungswellenlänge. Das Patent offenbart ein nicht-abbildendes, scannendes, nichtzeitkorreliertes System, das auf modulierten DC-Lasern basiert und Punktdetektoren verwendet.

Ein Detektor zur Multikanalspektroskopie und zur Erzeugung von Fluoreszenz-Lebensdauer-Bildern wurde von Kemnitz et al. offenbart (Kemnitz et al., 'Detector for multichannel spectroscopy and fluorescence lifetime imaging on the picosecond timescale', NUCLEAR INSTRUMENTS & METHODS IN PHYSICS RESEARCH; SECTION - A, NORTH-HOLLAND PUBLISHING COMPANY, AMSTERDAM, NL, Bd. 387, Nr. 1, 1. März 1997, Seiten 86-87, XPO04058923 ISSN: 0168-9002). Der Detektor arbeitet im Pikosekundenbereich.

Das Verfahren zur simultanen Erzeugung von zeit-aufgelösten Fluoreszenzbildern (Fluoreszenz-Lebensdauer-Imaging) und zeit-aufgelösten Emissionsspektren, basierend auf zeit- und orts-korrelierter Einzelphotonenzählung (ZOKEPZ) zur Bestimmung von Parametern bei Proben wie lebenden Zellen, in multi-well, in-vitro Fluoreszenz-Assays, in DNA-Chips, bei dem ein gepulster, hochfrequenter, polarisierter Laserstrahl auf eine Fluoreszenzprobe geleitet wird und das von der Fluoreszenzprobe emittierte Fluoreszenzlicht auf einen Strahlteiler (Intensitäts-, Farb-, bzw. Polarisationsteiler) gelenkt und dort in zwei Strahlteile gespalten wird, ist dadurch gekennzeichnet, dass in den zwei Strahlzweigen (T1, T2) mindestens zwei auf OZKEPZ basierende Listmode-Detektoren (13, 15) zu einem Multiparameter-Aquisitionssystem kombiniert werden, mit welchem zur maximalen Informationsgewinnung simultan alle physikalischen Parameter eines jeden Einzelphotons erfasst und in einer Kontroll-Elektronik (19) gespeichert und ausgewertet werden.

Ein solches System ist in der Lage, simultan ps/nszeitaufgelöste Fluoreszenzintensitäts-, Fluoreszenzlebensdauer- und Fluoreszenzanisotropie-Bilder samt Diffusionstrajektorien zu liefern. Es ist möglich, unter minimal-invasiven Bedingungen, z.B., FRET-Erfassung und FRET-Verifikation in lebenden Zellen durchzuführen.

Das Verfahren nach der Erfindung ist weiterhin dadurch gekennzeichnet, dass ein Strahlzweig des von der Probe emittierten Fluoreszenzlichtes durch ein Dispersionselement und ein Neutral- sowie Polarisationsfilter auf einen orts- und zeitkorrelierten Einzelphotonen-Zählungs-Detektor (OZKEPZ-Detektor) und der andere Strahlzweig durch ein Neutral- sowie Farb- und Polarisationsfilter auf einen zweiten OZKEPZ-Detektor geleitet werden, wobei in beiden Detektoren simultan Wellenlängen-/Orts- und Zeitkoordinaten bestimmt werden, die in einer Kontroll-Elektronik gespeichert und ausgewertet werden.

Im ersten Zweig der Vorrichtung werden zeitaufgelöste Emissionsspektren gemessen und im zweiten Zweig zeitaufgelöste Fluoreszenzbilder.

Im ersten Zweig kann entweder ein linearer DL-Detektor verwendet werden (liefert ein Spektrum des Zentrums der Probe) bzw. abbildende Detektoren (GDL, WS, 4QA, 5QA, CA, gated CCD), die simultan bis zu 250 individuelle Spektren liefern, entlang der Diagonalen durch die Probe (Verwendung eines abbildenden Polychromators als Dispersionselement).

Im zweiten Zweig kann entweder ein linearer DL-Detektor verwendet werden (liefert ein Linienbild durch das Zentrum der Probe) bzw. abbildende Detektoren (GDL, WS, 4QA, 5QA, CA, gated CCD).

Es sind Einzelanwendungen eines jeden Zweiges möglich, zum Beispiel im DL-Polychromator-Fluoreszenzmikroskop.

Durch simultane Messung der zeitaufgelösten FluoreszenzBilder und der zeitaufgelösten Fluoreszenz-Spektren gelingt es, die negativen Effekte der Autofluoreszenz zu eliminieren (z.B. FRET-Verifizierung). Die schnellste Komponente (ca. 100 ps) der Autofluoreszenz kann Förster-Resonanz-Energie-Transfer (FRET) vortäuschen, kann aber durch das viel breitere Emissionsspektrum, als Autofluoreszenz erkannt werden.

"FRET" repräsentiert hier einen speziellen Fall von "Reaktion im angeregten Zustand", bei der Energie übertragen wird. Es kann aber auch die Übertragung eines Elektrons oder eines Protons gemessen werden, die analoges Fluoreszenz-verhalten aufweisen.

Die Vorrichtungen (Fluoreszenzmikroskop) nach der Erfindung werden in den Ansprüchen 8 und 9 beschrieben. Die Vorrichtungen sind weiterhin dadurch gekennzeichnet, dass der eine Detektor mit einer linearen Delay-Line (DL) (einfacher Polychromator) bzw. mit einer gekreuzten Delay-Line (GDL), QA, WS oder allgemein CA- Anode, aber auch mit einer gated CCD, (abbildender Polychromator) ausgerüstet ist und hinter dem Strahlteiler, einem Dispersionselement und einem Neutral- sowie Polarisationsfilter im Strahlengang des einen Zweiges des emittierten Fluoreszenzlichts angeordnet ist und dass als ein weiterer Detektor ein GDL-, 4QA-, 5QA-, WS- oder CA-MCP-PMT (auch gated CCD) verwendet wird und hinter dem Strahlteiler und einem Neutral- sowie Farb- und Polarisationsfilter im Strahlengang des zweiten Zweiges des emittierten Fluoreszenzlichts angeordnet ist.

Bei Ausgestaltung des Strahlteilers als Farbteiler (dichroitischer Spiegel), der z.B. die FRET-Donor und FRET-Akzeptor Emissionsbande trennt, kann ein FRET-System aufgebaut werden, das keine Photonen verliert, da auf Polychromator (11) und Farbfilter (22) verzichtet werden kann.

Bei Ausgestaltung des Strahlteilers als Polarisationsteiler dagegen, der die parallele und senkrechte Polarisationsrichtungen trennt, kann ein verlustfreies Anisotropie-System aufgebaut werden, da auf die Polarisationsfilter (20, 21) verzichtet werden kann.

Beide Strahlengänge (Strahlzweige) können simultan oder sequentiell verwendet werden, oder aber auch getrennt, wenn z.B. das Autofluoreszenzproblem vernachlässigbar ist, bzw. sehr gut verstanden ist, und auf das zeitaufgelöste Spektrum zur FRET-Verifizierung verzichtet werden kann.

Das Mikroskop kann mit einem Multi-Punkt-Scanning System (Konfokaloptik) kombiniert werden, wie z.B. (i) einer rotierenden Mikrolinsen-Scheibe, (M. Straub and S. Hell, Appl.Phys.Lett., 73(1998)1769) oder einem (ii) Beam Multiplexer (LaVision BioTech GmbH, Höfeweg 74, 33619 Bielefeld), das beide die Möglichkeit der Konfokalität und der Zwei- oder Multiphotonenabsorption eröffnet, bzw., bei Anwendung der Einphotonabsorption, (iii) gekoppelt mit Nipkowscheiben-ähnlichen Vorrichtungen zur Konfokalität, wie z.B. zwei co-rotierenden Pinhole-/Mikrolinsen-Scheiben (Perkin, Elmer, Wallac) oder mit (iv) strukturiertem Licht (M.A.A. Neil et al., Optics Lett., 22(1997)1905, OptoLine System von Klughammer GmbH, Strassbach 9, 85229 Markt Indersdorf).

Mit der Vorrichtung nach der Erfindung kann ein Multi-Parameter-Fluoreszenzmikroskop aufgebaut werden, das zeitgleich alle verfügbaren physikalischen Parameter (Ortskoordinaten x und y, $\Delta$t(TAC), t(abs), Polarisation und Wellenlänge) eines jeden individuellen Photons messen und speichern kann.

Das erreichte Multi-Point-Scanning-System weist eine reduzierte Peakpower auf und gewährleistet damit eine minimal-invasive und zellschonende Beobachtung bei Zwei- bzw. Multiphotonabsorption.

Die hier vorgestellte Kombination von Zeit-, Spektral- und Orts-Analyse ermöglicht eine höchstmögliche Sensitivität und Selektivität, wie sie mit herkömmlichen Methoden nicht erreicht werden kann.

Durch simultane (oder sequenzielle) Messung der zeitaufgelösten Fluoreszenz-Spektren kann FRET eindeutig von Autofluoreszenz unterschieden werden (FRET-Verifikation). Aus den zeitaufgelösten Fluoreszenzspektren (Piko- und Nanosekunden Zeitskala) in jedem einzelnen Ortspixel erhält man die sogenannten DAS (decay-associated spectra) und SAS (species-associated spectra), die die maximale Information über Anzahl und Art der Fluorophore enthält (J.M. Beechem et al., Chem.Phys.Lett., 120(1985)466.).

Durch die Verwendung eines Donors mit sehr langer radiativer Fluoreszenzlebensdauer, z.B. Quantum Dots mit etwa 100 ns, kann die durch FRET reduzierte Lebensdauer in den ns-Bereich anstelle des schwierigen ps-Bereich geschoben werden. Im ns- und sub-ns-Bereich kann die Fluoreszenzlebensdauer mit erheblich größerer Präzision bestimmt werden und damit der Abstand zwischen Donor und Akzeptor.

Zweckmäßige Ausführungsformen sind in den Unteransprüchen beschrieben.

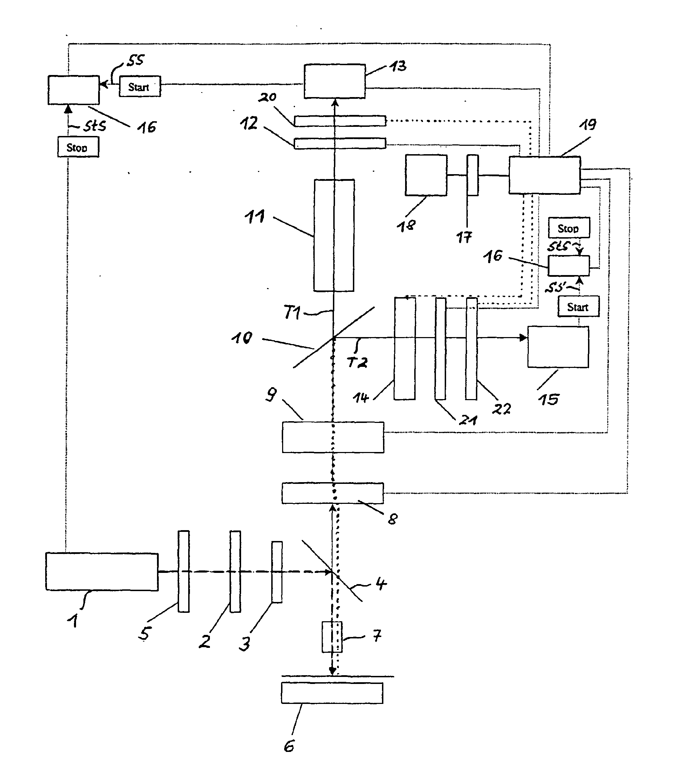

Die Erfindung wird in einem Ausführungsbeispiel eines Fluoreszenzmikroskops sowie in zwei Beispielen zur Anwendung des Verfahrens nach der Erfindung näher erläutert. In der zugehörigen Zeichnung zeigt die einzige Figur die schematische Anordnung der Baugruppen.

Entsprechend der Darstellung in der Fig. wird der Strahl (in der Fig. grob gestrichelt dargestellt) eines im Femto- bzw. Piko-Sekunden gepulsten, polarisierten, im Bereich von 1 bis 80 MHz hochfrequenten Lasers 1 durch einen Neutralfilter 5, eine Konfokaloptik 2 (Multi-Punkt Scanning System) und eine Einkoppeloptik 3 geleitet und trifft auf einen dichroitischen Spiegel 4, der den Lichtstrahl reflektiert und durch ein Objektiv 7 auf eine Fluoreszenzprobe 6 leitet (Epifluoreszenzanregung).

Das emittierte Fluoreszenzlicht (in der Fig. gepunktet dargestellt) kann den dichroitischen Spiegel 4 passieren, tritt durch Farb- und Polarisationsfilter 8, 9 und wird durch einen Strahlteiler 10 in etwa zwei gleiche Zweige T1, T2 gespalten.

Der eine Zweig T1 tritt durch ein Dispersionselememt 11 und ein Neutralfilter 12 sowie Polarisationsfilter 20 und trifft auf einen Orts- und Zeitkorrelierten Einzelphotonen-Zählungs-Detektor (OZKEPZ) 13.

Der andere Zweig T2 tritt direkt durch einen Neutralfilter 14 sowie ein Polarisations- und ein Farbfilter 21, 22 und trifft auf einen zweiten OZKEPZ 15. Die Lichtintensität des emittierten Lichts wird durch die Neutralfilter 5, 12, 14 im Anregungs- und Emissionsstrahlengang soweit abgeschwächt, dass nur jeweils ein Photon pro Laser-Anregungspuls detektiert wird (d.h. Einzelphotonenzählung, in der Praxis bis zu 100 Mal weniger, um Pulsanhäufung zu vermeiden). Durch Verwendung eines Pile-Up-Rejektors kann die Zählrate aber erhöht werden, die dann vergleichbar zum hohen Durchsatz einer geschalteten CCD wird.

Die Zeitkorrelation beider Detektoren 13, 15 erfolgt mittels jeweils eines TAC (time-to-amplitude converter) 16 sowie mittels nicht dargestellten Standard-Elektronikmodulen (z.B. CFD usw., wie sie in der Standard-Einzelphotonen-Zählung nach dem Stand der Technik verwendet werden). Der jeweilige TAC 16 misst die Zeitdifferenz zwischen Startsignal (Fluoreszenzphoton) SS und einem gemeinsamen Stopsignal StS (vom Laserpuls, der das Fluoreszenzphoton erzeugt hatte).

Die Einzelereignisse werden in einer Kontroll-Elektronik 19 zwischengespeichert, sortiert und synchronisiert und anschließend über ein Smart Interface 17 in einem PC 18 nacheinander abgespeichert (List Modus), können aber auch zu Histogrammen verarbeitet werden, die dann schnell und Speicherplatz schonend gespeichert werden können.

Die OZKEPZ-Detektoren 13, 15 sind in der Lage, simultan Orts- (bzw. Wellenlängen-) und Zeitkoordinaten zu bestimmen und die Kontroll-Elektronik 19 kann zusätzliche Parameter, wie Polarisationsrichtung, Emissionswellenlänge, absolute Ankunftszeit, etc. jedes einzelnen Ereignisses abspeichern. Da alle gemessenen Parameter jedes einzelnen Photons auf Festplatte verfügbar sind, kann jedes beliebige Diagramm erstellt werden, welches die einzelnen Parameter zueinander in Beziehung setzt (Replay Modus).

Die OZKEPZ-Detektoren 13, 15 sind eine neuartige Variante der bekannten Zeitkorrelierten Einzelphotonenzählung (ZKEPZ), welche nur jeweils das Fluoreszenzabklingen eines einzelnen Pixels messen kann.

Der Vorteil der neuen Detektoren liegt darin, dass sie simultan 200 (linear) bzw. 200x200 Ortspixel (Imaging) vermessen können. Durch Verwendung des Dispersionselements 11 kann zudem simultan das Fluoreszenzabklingen in 200 (linear) bzw. 200x200 (Imaging) Wellenlängenkanälen gemessen werden.

Polarisations- und Farbfilter 8, 21, 22; 9, 20 können manuell, bzw. optional elektro-mechanisch bzw. elektronisch gesteuert werden und sind mit der Kontroll-Elektronik 19 verbunden (fein gepunktete Linien).

Die Neutralfilter 5, 12, 14 können ebenfalls elektromechanisch gesteuert werden und mit der Zentralelektronik 19 verbunden sein (nicht dargestellt).

Opto-elektronische Farb- und Polarisations-Filter können im ms-Bereich gesteuert werden, Standardfilter dagegen elektromechanisch im Sekundentakt (pseudo-simultan), was aber bei einer Messdauer im Minutenbereich einer simultanen Akquisition gleichkommt.

Echt-simultane Akquisition wird erreicht, wenn man den Strahlteiler 10 als Farb- bzw. Polarisationsteiler ausführt und auf Dispersionselement, Farb- bzw. Polarisationsfilter vor den beiden Detektoren verzichtet. Der Farbteiler kann zum Beispiel so gestaltet werden, dass er FRET-Donor- und FRET-Akzeptor-Bande trennt, um ein verlustfreies (filterloses) FRET-System zu erreichen. Analog kann der Strahlteiler die Polarisationsrichtungen separieren, um ein verlustfreies Anisotropiesystem zu erlangen.

Das Mikroskop nach der Erfindung besteht im wesentlichen aus den folgenden Baugruppen, die ein Multi-Parameter-System basierend auf der OZKEPZ-Methode bilden:

- Standard-Epi-Fluoreszenzmikroskop bzw. ein TIR-Fluoreszenzmikroskop
- Optische Komponenten (Polychromator, Farb- und Polarisationsfilter)
- DL- oder GDL-Detektor (ein- oder zweidimensional) und/oder CA-Detektor (QA, WS, etc.), auch schaltbare CCD)

Mit diesem System (außer CCD) können alle verfügbaren physikalischen Parameter jedes Einzelphotons in Listmodus abgespeichert und im Replay-Modus in jeder beliebigen Kombination dargestellt werden:

$$h\nu = f\ [x,\ y,\ \Delta t(\mathrm{TAC}),\ t(\mathrm{abs}),\ \lambda(\mathrm{em}),\ \|\ /\perp],$$

Die Ortskoordinaten x,y liefern das Intensitätsbild, $\Delta t$(TAC) ist die laser-korrelierte Zeit und liefert Piko- und Nanosekunden-Fluoreszenzdynamik, t(abs) ist die absolute Ankunftszeit (gemessen durch > 10 MHz interne elektronische Uhr) und liefert Tracking-Potential und Diffusions-konstanten, die Polarisationrichtungen $\|$ /$\perp$ (parallel,perpendicular, magic) liefern Anisotropiedynamik, h$\nu$, die Emissionswellenlänge, liefert zeitaufgelöste Spektren.

Es entsteht somit, z.B., ein automatisiertes Fluoreszenzanisotropie-Imaging-Mikroskop, das zeitgleich (pseudo-simultan) drei Polarisationsrichtungen und zwei Emissionsfarben registrieren kann. Dazu sind der Anbau eines computergesteuerten Elektromotors an das Fluoreszenz-Mikroskop, eine Computersteuerung, ein Interface des Stepping Motors mit QA-Elektronik und eine Betriebs- und Anwendungs-Software notwendig.

In den folgenden zwei Anwendungsbeispielen werden die Vorteile des Verfahrens bzw. die neuen Möglichkeiten der in verschiedenen Stufen verfeinerten Fluoreszenztechnik verdeutlicht.

Statisch können die Beobachtungen bei zwei Wellenlängen (Ratio-Imaging) oder die Beobachtung des gesamten Spektrums in jedem Ortspixel (3D-Spektrograph) durchgeführt werden.

Zeitaufgelöst kann die Lebensdauer (bzw. Lebensdauern und prä-exponentielle Faktoren bei multi-exponentiellem Fluoreszenzabklingen) in jedem Ortspixel (ZOKEPZ-FLIM) des Gesamtbeobachtungsfeldes bestimmt werden zugleich mit dem zeitaufgelösten Fluoreszenzspektrum in jedem Ortspixel des Zentrums (DL) bzw. der Diagonale (QA und dgl.) . Die Diagonale kann z.B. als Referenz zur FRET-Verifizierung dienen, da sie mit großer Wahrscheinlichkeit Gebiete mit reiner Autofluoreszenz enthalten wird.

Die Beobachtung des gesamten Spektrums in jedem Ortspixel (statisch) des Gesamtgesichtsfeldes in Kombination mit der Bestimmung der Lebensdauer in jedem Ortspixel des Gesamtgesichtsfeldes, d. h. die Kombination von statischem Emissionsspektrum mit ZOKEPZ-Hochqualitätskinetik in jedem Ortspixel, erschließt neuartige Anwendungen (z.B. FRET-Verifizierung).

Beispiele hierfür bilden:

Beispiel (i): Die Charakterisierung der Eigenschaften von Zellen und Geweben spielt eine große Rolle bei der Erkennung und Lokalisierung von krankhaft verändertem Gewebe, bei der Qualitätskontrolle von Transplantationsmaterialien oder bei der Prozesssteuerung in der Zellkultivierung. Insbesondere können Protein-Protein Wechselwirkungen und 3D-makromolekulare Strukturen in lebenden, individuellen Zellen mit Hilfe von fluoreszierenden Molekülsonden (z.B. GFP und Derivate) und der Anwendung von FRET (Förster Resonanz Energie Transfer), zwischen den einzelnen GFP-Derivaten, bestimmt werden, da die FRET-Lebensdauer proportional zur 6-ten Potenz des Abstandes zwischen Donor und Akzeptor ist. Der FRET zwischen Donor und Akzeptor ist, im Idealfall, durch ein schnelles Fluoreszenzabklingen (z.B. 100 ps) des Donors auf der blauen Seite des beobachteten Fluoreszenzbandes (Donor-Emission) und durch ein gleichschnelles Anwachsen der Fluoreszenz auf der roten Seite (Akzeptor-Emission) gekennzeichnet. Jedoch kann das schnelle Abklingen durch Beiträge von Autofluoreszenz vorgetäuscht werden und/oder auch der schnelle Anstieg neutralisiert werden. Durch simultane Akquisition der Zeit-, Wellenlängen- und Orts-Information gelingt es jedoch, FRET von Autofluoreszenz zu unterscheiden (FRET-Verifizierung).

Beispiel (ii): Moderne Fluoreszenzanalyse verwendet Bio-Assays (z.B. Früherkennung der BSE, Berliner Zeitung, 147(2001)2.), in denen fluoreszenzmarkierte Antikörper mit dem zu identifizierenden Biomolekül reagiert und es dadurch sichtbar macht. Dazu werden mikro- oder makroskopische Arrays von Probenbehältern (Multi-Wells) verwendet und neuerdings auch zeitauflösende Methoden, die die Fluoreszenzlebensdauer in jedem Behältnis simultan bestimmen (gated CCD, OLE September 2000, Seite 12).

Durch simultane Bestimmung der ps/ns zeitaufgelösten Fluoreszenzspektren von hoher Qualität (multi-exponentiell: bis zu 5 Lebensdauerkomponenten), wie hier beschrieben, in z.B. 200 x 200 Behältnissen, kann jedoch die Sensitivität und Selektivität deutlich gesteigert werden. Es können mikroskopische Behältnisse und ein Fluoreszenzmikroskop bzw. makroskopische Behältnisse und makroskopische Optik (Makroskop) oder Lichtleiter zum Einsatz kommen. Eine simultane, hoch-parallele Analyse der Zeit-, Wellenlängen- und Orts-Information resultiert in gesteigerter Sensitivität und Selektivität.

**Bezugszeichenliste**

| | |
|---|---|
| 1 | Laser |
| 2 | Konfokaloptik (Multi-Punkt Scanning System) |
| 3 | Einkoppeloptik |
| 4 | Dichroitischer Spiegel |
| 5 | Neutralfilter |
| 6 | Fluoreszenzprobe |
| 7 | Objektiv |
| 8 | Farbfilter |
| 9 | Polarisationsfilter |
| 10 | Strahlteiler lintensitäts-, Farb-, bzw. Polarisationsteiler) |
| 11 | Dispersionselement |
| 12 | Neutralfilter |
| 13 | Detektor |
| 14 | Neutralfilter |
| 15 | Detektor |
| 16 | Zeit-Amplituden Konverter (TAC) |
| 17 | Smart-Interface |
| 18 | PC |
| 19 | Kontroll-Elektronik |
| 20 | Polfilter (Analysator) |
| 21 | Polfilter (Analysator) |
| 22 | Farbfilter |
| StS | Stopsignal |
| SS | Startsignal |
| | |
| T1 | Teilzweig (Teilstrahl) |
| T2 | Teilzweig (Teilstrahl) |

**Patentansprüche**

1. Verfahren zur Charakterisierung der Eigenschaften von fluoreszierenden Proben, bei Proben wie lebenden Zellen und Geweben, in multi-well, in in-vitro Fluoreszenz-Assays, in DNA-Chips mit folgenden Schritten:

   - Leiten eines gepulsten, hochfrequenten polarisierten Laserstrahls auf die Probe,
   - Lenken des von der Probe emittierten Fluoreszenzlichts auf einen Strahlteiler zur Aufspaltung in zwei Strahlzweige, wobei
   - in den zwei Strahlzweigen simultan alle verfügbaren physikalischen Parameter eines jeden Einzelphotons mit jeweils einem orts- und Zeitkorrelierten Einzelphotonen-Zählungs-Detektor erfasst werden, indem in dem einen Strahlzweig das zeitaufgelöste zweidimensionale Fluoreszenzbild erfasst wird und in dem anderen Strahlzweig ein oder mehrere zeit- und ortsaufgelösten Emissionsspektren erfasst werden und die gemessenen Parameter gespeichert und anschließend in der Auswertung in beliebiger Kombination dargestellt werden.

**2.** Verfahren nach Anspruch 1, **dadurch gekennzeichnet, dass** fluoreszenzhintergrund-korrigierte Lebensdauerbilder sowie zeitaufgelöste Emissionsspektren bestimmt werden, indem die simultan gemessenen Fluoreszenzen und Autofluoreszenzen miteinander korrigiert werden, dass eine automatisierte FRET-Erkennung und/oder FRET-Verifizierung erfolgt.

**3.** Verfahren nach Anspruch 1, **dadurch gekennzeichnet, dass** zeit-, orts- und wellenlängenaufgelöste Anisotropie-Fluoreszenzdynamik-Bilder gemessen werden.

**4.** Verfahren nach Anspruch 1, **dadurch gekennzeichnet, dass** die Diffusion von fluoreszierenden Vehikeln wie fluoreszenz-markierte Makromoleküle, Viren auf der Sub-Sekunden- bis Stunden-Zeitskala verfolgt und gleichzeitig die ns/ps-Fluoreszenzdynamik kontinuierlich entlang des Diffusionspfades gemessen wird.

**5.** Verfahren nach Anspruch 1, **dadurch gekennzeichnet, dass** das gesamte Spektrum und die Lebensdauer und/oder Lebensdauern und prä-exponentiellen Faktoren bei multi-exponentiellem Fluoreszenzabklingen in jedem Ortspixel bestimmt werden, wobei das typische wellenlängen-abhängige Verhalten des Decay-Associated Spektrums (DAS) der schnellen Komponente oder die Gleichheit des Donor-Fluoreszenzabklingens mit dem Akzeptor-Fluoreszenzanstieg als Beweis für FRET gilt.

**6.** Verfahren nach Anspruch 5, **dadurch gekennzeichnet, dass** zur Präzisionsbestimmung von sehr kurzen FRET-Donor-Akzeptor-Abständen ein Donor mit sehr langer radiativer Fluoreszenzlebensdauer von etwa 100 ns verwendet wird, so dass die durch FRET reduzierte Lebensdauer aus dem ps-Bereich in den ns-Bereich verschoben wird.

**7.** Verfahren nach einem der Ansprüche 1 bis 6, **dadurch gekennzeichnet, dass** ultra-niedrige Anregungsenergien bis hin zum mW/cm2-Bereich in einer minimal-invasiven Beobachtung Anwendung finden.

**8.** Vorrichtung zur Durchführung des Verfahrens nach einem
der Ansprüche 1 bis 7,
mit einem Laser (1)
einem dichroitischen Spiegel (4)
einem Strahlteiler (10) zur Aufspaltung in zwei Strahlzweige (T1, T2)
jeweils einem orts- und zeitkorrelierten Einzelphotonen-Zählungs Detektor (13, 15) in jedem der Strahlzweige, wobei der Detektor in dem einen Strahlzweig zur Erfassung des zeitaufgelösten zweidimensionalen Fluoreszenzbildes ausgebildet ist und der Detektor in dem anderen Strahlzweig zur Erfassung der zeit- und ortsaufgelösten Emissionsspektren ausgebildet ist,
einem Dispersionselement (11) zur Ortsauflösung der Fluoreszenz, angeordnet zwischen Strahlteiler und Detektor (13) in dem einen Strahlzweig (T1) zur Erfassung der zeit- und ortsaufgelösten Emissionsspekitren,
Mitteln zur simultanen Erfassung, Speicherung und Auswertung sowie Darstellung der erfassten Parameter.

**9.** Vorrichtung zur Durchführung des Verfahrens nach
einem der Ansprüche 1 bis 7,
mit einem Laser (1)
einem dichroitischen Spiegel (4)
einem Strahlteiler (10) zur Aufspaltung in zwei Strahlzweige (T1, T2)
jeweils einem orts- und zeitkorrelierten Einzelphotonen-Zählungs,Detektor (13, 15) in jedem der Strahlzweige, wobei der Detektor in dem einen Strahlzweig zur Erfassung des zeitaufgelösten zweidimensionalen Fluoreszenzbildes des Donors ausgebildet ist und der Detektor in dem anderen Strahlzweige zur Erfassung des zeitaufgelösten zweidimensionalen Fluoreszenzbildes des Akzeptors ausgebildet ist, je einem Filter in den Strahlzweigen (T1, T2), und Mitteln zur Speicherung und Auswertung sowie Darstellung der erfassten Parameter.

**10.** Vorrichtung nach Anspruch 8, **dadurch gekennzeichnet, dass** der Detektor (13) in dem einen Strahlzweig (T1) ein linearer DL-Detektor oder ein abbildender Detektor (GDL, WS, 4QA, 5QA, CA, Gated CCD) ist.

**11.** Vorrichtung nach Anspruch 8, **dadurch gekennzeichnet, dass** der Detektor (15) in dem anderen Strahlzweig (T2) ein linearer DL-Detektor oder ein abbildender Detektor (GDL, WS, 4QA, 5QA, CA, Gated CCD) ist.

**12.** Vorrichtung nach Anspruch 8, **dadurch gekennzeichnet, dass** eine Kontroll-Elektronik (19) zur Zwischenspeicherung, Sortierung und Synchronisation der Einzelergebnisse angeordnet und mit einem Rechner (18) zur Abspeicherung verbunden ist.

**13.** Vorrichtung nach Anspruch 8, **dadurch gekennzeichnet, dass** der Detektor ein Coded-Anode Detektor ist, der eine fünfte, als Ringanode ausgebildete Anode enthält.

**14.** Vorrichtung nach Anspruch 8, **dadurch gekennzeichnet, dass** ein Multi-Punkt-Scanning-System als Konfokaloptik (2) zwischen dem Laser (1) und einem dichroitischen Spiegel (4) angeordnet ist.

**15.** Verwendung der Vorrichtung nach einem der Ansprüche 8 bis 14 in einem Multi-Parameter Dual-Detektor Fluoreszenzmikroskop, das zeitgleich alle verfügbaren physikalischen Parameter eines jeden individuellen Photons messen und in List-Modus speichern kann.

**16.** Verwendung nach Anspruch 15, wobei das Fluoreszenzmikroskop ein automatisiertes Fluoreszenz-Anisotropie-Imaging-Mikroskop ist. ist.

**17.** Verwendung der Vorrichtung nach einem der Ansprüche 8 bis 14 bei der Makro-Spektroskopie zur Erzeugung von zeit- und ortsaufgelösten Fluoreszenzbildern zur Bestimmung von Parametern bei Proben in multi-well, in-vitro Fluoreszenz-Assays und DNA-Chips.

**Claims**

**1.** Method for the characterisation of the properties of fluorescent samples for samples such as living cells and tissues in multi-well, in in-vitro fluorescent assays, in DNA-chips with the following steps:

-- Conducting of a pulsed, high-frequent and polarised laser beam onto the sample,
-- Guiding of the fluorescence light emitted from the sample onto a beam splitter for splitting up into two beam paths, where
-- in the two beam paths simultaneously, all available physical parameters of every single photon are detected in each case with a location and time correlated single photons - counting - detector where, in the one beam path, the time-resolved two-dimensional fluorescence image is detected and, in the other beam path, one or several time and location-resolved emission spectra are detected, and the measured parameters are stored and finally illustrated in the evaluation in random combination.

**2.** Method according to Claim 1 wherein the fluorescence background-corrected life duration images as well as time-resolved emission spectra are determined, where the simultaneously measured fluorescences and auto-fluorescences are corrected with one another in such a way that an automatic FRET-recognition and/or a FRET-verification is effected.

**3.** Method according to Claim 1 wherein the time-, location- and wavelength-resolved anisotropy-fluorescence dynamic images are measured.

**4.** Method according to Claim 1 wherein the diffusion of fluorescent vehicles such as fluorescence-marked macromolecules tracks viruses on the sub-second to the hour time-scale and, at the same time, the ns/ps-fluorescence dynamic is continually measured along the diffusion path.

**5.** Method according to Claim 1 wherein the entire spectrum and the life duration and/or life durations and pre-exponential factors with multi-exponential fluorescence decay in every location pixel are determined, where the typical wavelength-dependent reaction of the decay-associated spectrum (DAS) of the quick component or the equality of the donor fluorescence decay with the acceptor fluorescence increase applies as a verification for FRET.

**6.** Method according to Claim 5 wherein, for the precision determination of very short FRET-donor-acceptor spaces, a donor with very long radiative fluorescence life duration of approximately 100 ns is used, so that the life duration reduced by FRET is shifted from the ps-range into the ns-range.

**7.** Method according to one of the Claims 1 to 6 wherein ultra-low excitation energies are applied all the way to the mW/cm2-range in a minimal invasive observation.

**8.** Apparatus for executing the method according to one of the Claims 1 to 7, with a laser (1),
a dichroic mirror (4),

a beam splitter (10) for splitting up into two beam paths (T1, T2),
in each case a location and time correlated single photons - counting - detector (13, 15) in each of the beam paths,
where the detector is formed in the one beam path for the detection of the time-resolved two-dimensional fluorescence image and the detector in the other beam path is formed for the detection of the time and location-resolved emission spectra,
a dispersion element (11) for the location resolution of the fluorescence, arranged between beam splitter and detector (13) in the one beam path (T1) for the detection of the time and location-resolved emission spectra, and devices for the simultaneous detection, storage and evaluation as well as illustration of the detected parameters.

9. Apparatus for the execution of the method according to one of the Claims 1 to 7,
with a laser (1),
a dichroic mirror (4),
a beam splitter (10) for splitting up into two beam paths (T1, T2),
in each case a location and time correlated single photons - counting - detector (13, 15) in each of the beam paths,
where the detector is formed in the one beam path for the detection of the time-resolved two-dimensional fluorescence image of the donor and the detector is formed in the other beam path for the detection of the time-resolved two-dimensional fluorescence image of the acceptor, in each case one filter in the beam paths (T1, T2), and devices for the storage and evaluation as well as illustration of the detected parameters.

10. Apparatus according to Claim 8 wherein the detector (13) in the one beam path (T1) is a linear DL-detector or an imaging detector (GDL, WS, 4QA, 5QA, CA, Gated CCD).

11. Apparatus according to Claim 8 wherein the detector (15) in the other beam path (T2) is a linear DL-detector or an imaging detector (GDL, WS, 4QA, 5QA, CA, Gated CCD).

12. Apparatus according to Claim 8 wherein a control electronic unit (19) for interim storage, sorting and synchronisation of the individual results is arranged and is connected to a computer (18) for storage.

13. Apparatus according to Claim 8 wherein the detector is a coded-anode detector which contains a fifth anode formed as a ring anode.

14. Apparatus according to Claim 8 wherein a multiple-point scanning system is arranged as a confocal optic system (2) between the laser (1) and a dichroic mirror (4).

15. Usage of the apparatus according to one of the Claims 8 to 14 in a multiple-parameter dual detector fluorescence microscope that can simultaneously measure all available physical parameters of each individual photon and can store these in list-mode.

16. Usage according to Claim 15 where the fluorescence microscope is an automatic fluorescence anisotropy imaging microscope.

17. Usage of the apparatus according to one of the Claims 8 to 14 with the macrospectroscopy for the production of time and location-resolved fluorescence images for the determination of parameters for samples in multi-well, in-vitro fluorescence assays and DNA chips.

**Revendications**

1. Procédé de caractérisation des propriétés d'échantillons fluorescents dans des multipuits, dans des essais de fluorescence in vitro, dans des puces à ADN, concernant des échantillons tels que cellules vivantes et tissus vivants, le procédé comprenant les étapes suivantes:

- la conduction d'un faisceau laser sur l'échantillon, le faisceau laser étant pulsé, de haute fréquence et polarisé
- la direction de la lumière de fluorescence émise par l'échantillon vers un séparateur de faisceau pour la décomposition en deux branches du faisceau, procédé dans lequel
- tous les paramètres physiques de chaque photon individuel sont acquis simultanément dans les deux branches du faisceau par respectivement un détecteur compteur de photons individuels lequel est en corrélation spatiale et temporelle, en acquérant l'image de fluorescence résolue temporellement et bidimensionnelle dans l'une des deux branches du faisceau, et en acquérant un ou plusieurs spectres d'émission résolus temporellement et spatialement dans l'autre branche du faisceau, et en mémorisant les paramètres mesurés, et en les représentant ensuite en toute combinaison dans l'évaluation.

2. Procédé selon la revendication 1,
   **caractérisé en ce que** des images de durée de vie au fond fluorescent corrigé ainsi que des spectres d'émission résolus temporellement sont déterminés en corrigeant les fluorescences, mesurées simultanément, avec les auto-fluorescences (et vice versa) de sorte qu'une identification automatisée du FRET et/ou bien une vérification automatisée du FRET a lieu.

3. Procédé selon la revendication 1,
   **caractérisé en ce que** des images anisotropiques de dynamique de fluorescence résolues temporellement, spatialement et spectralement sont mesurées.

4. Procédé selon la revendication 1,
   **caractérisé en ce que** la diffusion de véhicules fluorescents tels que macromolécules marquées par fluorescence poursuit des virus sur l'échelle temporelle allant des sub-secondes aux heures, et que simultanément la dynamique de fluorescence en ns/ps est mesurée continuellement tout le long du chemin de diffusion.

5. Procédé selon la revendication 1,
   **caractérisé en ce que** l'ensemble du spectre et la durée de vie et/ou bien les durées de vie et les facteurs pré-exponentiels sont déterminés dans chaque pixel spatial, au déclin multi-exponentiel de fluorescence, le comportement dépendant de la longueur d'onde lequel est typique pour le spectre decay-associated (DAS) de la composante rapide ou bien l'égalité du déclin de la fluorescence du donneur et de la montée de fluorescence de l'accepteur valant comme preuve du FRET.

6. Procédé selon la revendication 5,
   **caractérisé en ce qu'**un donneur à la durée de vie radiative de fluorescence très longue d'environ 100 ns est utilisé pour la détermination précise de très courtes distances entre le donneur du FRET et l'accepteur du FRET de sorte que la durée de vie réduite par le FRET est reportée du niveau ps au niveau ns.

7. Procédé selon l'une des revendications 1 à 6,
   carcatérisé en ce que des énergies d'excitation ultra-basses allant jusqu'au niveau de mW/cm2 sont appliquées à une observation minimalement invasive.

8. Dispositif de mise en oeuvre du procédé selon l'une des revendications 1 à 7, comportant
   un laser (1)
   un miroir dichroïque (4)
   un séparateur de faisceau (10) destiné à la décomposition en deux branches du faisceau (T1, T2)
   respectivement un détecteur compteur de photons individuels (13, 15) lequel est en corrélation spatiale et temporelle, dans chacune des deux branches du faisceau, le détecteur dans l'une des deux branches du faisceau étant formé afin de permettre l'acquisition de l'image de fluorescence résolué temporellement et bidimensionnelle, et le détecteur dans l'autre branche du faisceau étant formé afin de permettre l'acquisition des spectres d'émission résolus temporellement et spatialement,
   un élément de dispersion (11) pour la résolution spatiale de la fluorescence, disposé entre le séparateur de faisceau et le détecteur (13) dans l'une des deux branches du faisceau (T1) afin de permettre l'acquisition des spectres d'émission résolus temporellement et spatialement, et des moyens pour l'acquisition simultanée, la mémorisation et l'évaluation ainsi que pour la représentation des paramètres acquis.

9. Dispositif de mise en oeuvre du procédé selon l'une des revendications 1 à 7, comportant
   un laser (1)
   un miroir dichroïque (4)
   un séparateur du faisceau (10) destiné à la décomposition en deux branches du faisceau (T1, T2)
   respectivement un détecteur compteur de photons individuels (13, 15) lequel est en corrélation spatiale et temporelle, dans chacune des deux branches du faisceau, le détecteur dans l'une des deux branches du faisceau étant formé afin de permettre l'acquisition de l'image de fluorescence résolue temporellement et bidimensionnelle du donneur, et le détecteur dans l'autre branche du faisceau étant formé afin de permettre l'acquisition de l'image de fluorescence résolue temporellement et bidimensionnelle de l'accepteur, respectivement un filtre dans les branches du faisceau (T1, T2), et des moyens pour la mémorisation et l'évaluation ainsi que pour la représentation des paramètres acquis.

10. Dispositif selon la revendication 8,
**caractérisé en ce que** le détecteur (13) dans l'une des deux branches du faisceau (T1) est un détecteur DL linéaire ou un détecteur d'image (GDL, WS, 4QA, 5QA, CA, Gated CCD).

11. Dispositif selon la revendication 8,
**caractérisé en ce que** le détecteur (15) dans l'autre branche du faisceau (T2) est un détecteur DL linéaire ou un détecteur d'image (GDL, WS, 4QA, 5QA, CA, Gated CCD).

12. Dispositif selon la revendication 8,
**caractérisé en ce qu'**une électronique de contrôle (19) destinée à la mémorisation intermédiare, au tri et à la synchronisation des résultats individuels est présente et qu'elle est reliée à un ordinateur (18) pour la mémorisation.

13. Dispositif selon la revendication 8,
**caractérisé en ce que** le détecteur est un détecteur Coded-Anode lequel comprend une cinquième anode formée en tant qu'anode annulaire.

14. Dispositif selon la revendication 8,
**caractérisé en ce qu'**un système de balayage multi-point est disposé entre le laser (1) et un miroir dichroïque (4) en tant qu'optique confocale (2).

15. Utilisation du dispositif selon l'une des revendications 8 à 14 dans un microscope à fluorescence multi-paramètre et à détecteur dual, le microscope étant capable de mesurer simultanément tous les paramètres physiques disponibles de chaque photon individuel et de les mémoriser en mode list.

16. Utilisation selon la revendication 15, dans laquelle le microscope à fluorescence est un microscope automatisé d'image de fluorescence et d'anisotropie.

17. Utilisation du dispositif selon l'une des revendications 8 à 14 dans la macrospectroscopie pour la production d'images de fluorescence résolues temporellement et spatialement pour la détermination de paramètres dans des échantillons dans des multipuits, dans des essais de fluorescence in vitro et dans des puces à ADN.